# EUROPÄISCHE PATENTANMELDUNG

(11) **EP 0 804 989 A1**
(43) Veröffentlichungstag der Anmeldung: **05.11.1997**
(21) Anmeldenummer: 97106046.2
(22) Anmeldetag: 12.04.1997
(51) Int. Cl.: B23D 61/02

(54) **Kreissägeblatt und Verfahren zu dessen Herstellung**

(30) Priorität: 29.04.1996 DE 19617067
(71) Anmelder: Dietz, Hans, Prof. Dr., D-72119 Ammerbuch (DE)
(72) Erfinder:
(74) Vertreter: Witte, Alexander, Dr.-Ing.

(57) **Zusammenfassung**

Ein Kreissägeblatt dient insbesondere zum Sägen von Holz. Es umfaßt einen Ringkörper (11), der an seinem äußeren Rand mit Zähnen versehen ist, wobei der Ringkörper (11) eine hohlkegelige Gestalt aufweist und entlang eines Umfanges radial innerhalb der Zähne (16) mit einer Wulst (20) versehen ist. Die Wulst (20) ist an ihrer Oberseite als flaches Plateau (22) ausgebildet. Zum Herstellen des Kreissägeblatts wird der Ringkörper (11) entlang der Wulst (20) gewalzt und dann gegen einen konzentrischen, kegelförmigen Träger verschraubt und dabei zu einer hohlkegeligen Gestalt umgeformt.

## Beschreibung

Die Erfindung betrifft ein Kreissägeblatt, insbesondere zum Sägen von Holz, mit einem flachen Ringkörper, der an seinem äußeren Rand mit Zähnen versehen ist, wobei der Ringkörper eine kegelige Gestalt aufweist und entlang eines Umfanges radial innerhalb der Zähne mit einer Wulst versehen ist.

Die Erfindung betrifft ferner ein Verfahren zum Herstellen eines Kreissägeblattes, insbesondere zum Sägen von Holz unter Verwendung eines flachen Ringkörpers, der an seinem äußeren Rand mit Zähnen versehen ist, wobei der Ringkörper entlang eines Umfanges radial innerhalb der Zähne mit einer Wulst versehen ist, und wobei ferner der Ringkörper entlang von zu seiner Drehachse konzentrischen Kreisen gewalzt wird.

Ein Kreissägeblatt und ein Verfahren der vorstehend genannten Art sind aus der DE 41 20 217 C2 bekannt.

Das bekannte Kreissägeblatt dient ebenso wie das Kreissägeblatt gemäß der vorliegenden Erfindung insbesondere zum Trennen oder Schlitzen von Holz, allgemeiner ausgedrückt eines starren Schnittguts mit einem Elastizitätsmodul von vorzugsweise etwa 50.000 bis 400.000, insbesondere 100.000 bis 160.000 kg/cm², bei dem das Sägeblatt bei einer Schnittgeschwindigkeit von mehr als etwa 40 m/s einen Spalt endlicher Breite anbringt. Kreissägen der vorstehend genannten Art werden zum Beispiel verwendet, um beim Profilieren von Baumstämmen sogenannte Seitenbretter von der verbleibenden Hauptware zu trennen.

Es ist dabei bekannt (DE 36 35 318 C2), das Kreissägeblatt so auszubilden, daß die abgetrennte Seitenware unmittelbar nach dem Passieren der umlaufenden Zähne mittels eines raumfesten Trennelementes aus der Trennebene heraus abgebogen wird.

Bei dem Kreissägeblatt gemäß der eingangs genannten DE 41 20 217 C2 besteht die Anordnung aus einem Träger, der zentral eine Aufnahmeöffnung für eine Antriebswelle der Kreissäge aufweist. Der Träger ist als Drehkörper ausgebildet und läuft an seinem Rand mit seiner unteren Oberfläche kegelförmig bzw. hohlkegelförmig aus. Ein relativ dünnes Blatt ist an dem Randbereich des Trägers befestigt, und zwar derart, daß das Blatt durch Verschrauben gegen die kegelige bzw. hohlkegelige Oberfläche ebenfalls eine hohlkegelförmige Gestalt annimmt. Der Neigungswinkel des Kegels liegt dabei zwischen 0,1° und 1°. Bei einem Sägeblattaußendurchmesser in der Größenordnung von 700 mm führt ein solcher Winkel zu einer Höhe des Kegels in der Achse zwischen 0,6 und 6 mm.

Zur Herstellung dieses bekannten Kreissägeblatts wird das dünne Blatt zunächst in ebener Form hergestellt. Das Blatt wird dann entlang von Kreisen gewalzt, die konzentrisch zu seiner Drehachse liegen. Insbesondere wird das Blatt dabei gerollt.

Das gewalzte bzw. gerollte Blatt, das in diesem Stadium des Herstellungsverfahrens immer noch eine ebene Form aufweist, wird dann gegen die kegelige bzw. hohlkegelige Oberfläche des Trägers verschraubt. Während dieses Verschraubens schnappt das Blatt von seiner ebenen Form in die hohlkegelige Form entsprechend der Gegenfläche des Trägers um.

Das bekannte Sägeblatt ist an seinem Umfang radial innerhalb der Zähne mit einer vorstehenden Wulst versehen. Die Wulst hat im Radialschnitt eine dreieckförmige Gestalt. Die Wulst weist damit gegenüber der Peripherie des Blattes eine leicht schräge Abweis- oder Anlauffläche auf, da sich die Wulst zur Achse hin verdickt. Auf der Rückseite, d.h. der radialen Innenseite der Wulst, ist diese mit einer Stufe versehen. Diese Stufe schmiegt sich mit geringem spiel an ein raumfestes Abweis- bzw. Trennelement an, das ebenfalls als Ringscheibe ausgebildet und konzentrisch zum Träger angeordnet ist.

Auf diese Weise wird erreicht, daß die von den Zähnen des Blattes abgetrennte Seitenware unmittelbar nach dem Passieren der Zähne zunächst auf die Anlauffläche der Wulst aufläuft und dann von dieser stetig zum raumfesten Trennelement übergeben wird. Es ist in diesem Zusammenhang bekannt, den Steigungswinkel des Trennelementes so groß auszubilden, daß die abgetrennte Seitenware nur beim erstmaligen Auflaufen ihrer axialen Stirnseite mit der Anlauffläche der Wulst in Berührung kommt, während nach dem Auflaufen der Seitenware auf dem Abweis- oder Trennelement der Abweiswinkel so groß wird, daS die abgetrennte Seitenware die Länge zwischen den Zähnen und dem Abweis- oder Trennelement berührungslos überbrückt.

In der Praxis der Herstellung der bekannten Kreissägeblätter gemäß DE 41 20 217 C2 hat sich herausgestellt, daß der Walz- bzw. Rollvorgang optimiert werden kann, wenn der Kreis, auf dem gewalzt bzw. gerollt wird, in etwa mit dem Umfang übereinstimmt, auf dem sich die Wulst befindet.

Ein Walzen des bekannten Kreissägeblattes entlang der Wulst hat jedoch zwei Nachteile:

Zum einen ist es technisch problematisch, entlang eines Umfanges zu walzen oder zu rollen, an dem das entsprechende Walz- oder Rollwerkzeug auf einer schrägen Fläche bzw. in Kontakt mit einer scharfen Kante der Wulst gelangt, die zwischen der schrägen Anlauffläche und der im wesentlichen axial verlaufenden Stufe besteht.

Zum anderen muß das Blatt in diesem Bereich hinreichend dick ausgebildet werden, um die beim Walzen oder Rollen auftretenden Kräfte im Blatt aufnehmen zu können. Wenn die Kräfte zu groß sind oder das Blatt zu dünn ist, besteht sonst die Gefahr, daß das Blatt beim Walzen oder Rollen im Bereich seiner Zähne außerhalb der Wulst bricht.

Bei all dem ist zu berücksichtigen, daß man bestrebt ist, das Blatt so dünn wie möglich auszubilden, weil ein dünnes Blatt zu einer schmalen Schnittfuge und damit zu einer hohen Ausbeute des Holzes bei geringem Sägemehlanteil führt.

Der Erfindung liegt daher die Aufgabe zugrunde, ein Kreissägeblatt und ein Verfahren der eingangs genannten Art dahingehend weiterzubilden, daß auch sehr dünne Kreissägeblätter mit großen Kräften gewalzt oder gerollt werden können.

Bei einem Kreissägeblatt der eingangs genannten Art wird diese Aufgabe erfindungsgemäß dadurch gelöst, daß die Wulst an ihrer Oberseite als flaches Plateau ausgebildet ist.

Bei dem Verfahren der eingangs genannten Art wird die der Erfindung zugrundeliegende Aufgabe hingegen dadurch gelöst, daß die Wulst an ihrer Oberfläche als flaches Plateau ausgebildet und der Ringkörper entlang der Wulst gewalzt wird.

Die der Erfindung zugrundeliegende Aufgabe wird auf diese Weise vollkommen gelöst.

Durch die planparallele Verbreiterung des Sägeblattes in radialer Richtung entsteht nämlich eine Walzfläche, die es erlaubt, große Kräfte und damit Spannungen auf das Kreissägeblatt aufzubringen, ohne daß eine unkontrollierte Kräfte- bzw. Spannungsverteilung entsteht. Durch geeignete Dimensionierung der Wulst hat man es darüber hinaus in der Hand, mit einem einzigen Walz- oder Rollvorgang auszukommen und diesen entsprechend der jeweils gewünschten nachfolgenden Umformung von einer ebenen in eine hohlkegelige Gestalt zu optimieren. Es entfällt daher auch die Notwendigkeit, außerhalb der Ringwulst in dem sehr dünnen Bereich des Blattes walzen zu müssen, an dem sich die Zähne befinden und wo die notwendige plastische Verformung infolge des dort sehr dünnen Sägeblattmaterials nicht mehr erreicht werden kann, ohne ein Abbrechen des Blattes in Kauf nehmen zu müssen.

Bei einer bevorzugten Weiterbildung des erfindungsgemäßen Kreissägeblattes weist das Plateau eine radiale Breite auf, die drei- bis zehnmal, vorzugsweise sechs- bis siebenmal so groß ist wie die axiale Dicke des Ringkörpers radial außerhalb der Wulst. Ferner ist bevorzugt, wenn die axiale Dicke der Wulst ein- bis dreimal, vorzugsweise ein- bis zweimal so groß ist wie die axiale Dicke des Ringkörpers radial außerhalb der Wulst. Weiterhin wird eine gute Wirkung erzielt, wenn der äußere Radius des Plateaus zwischen 70 % und 90 %, vorzugsweise 80 % bis 90 % des Flugkreisradius der Zähne beträgt.

Diese Dimensionierungen haben sich in der Praxis für übliche Werkstoffe von Sägeblättern bei den eingangs genannten üblichen Dimensionen dieser Kreissägeblätter bestens bewährt.

Bei einer bevorzugten Weiterbildung des erfindungsgemäßen Verfahrens wird der Ringkörper nach dem Walzen in an sich bekannter Weise gegen einen konzentrischen, kegelförmigen Träger verschraubt und dabei zu einer hohlkegeligen Gestalt umgeformt.

Diese Maßnahme hat den Vorteil, daß der Kegelwinkel exakt definiert werden kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt. Es zeigen:
- Fig. 1: einen Ausschnitt aus einem Ausführungsbeispiel eines erfindungsgemäßen Kreissägeblattes;
- Fig. 2: eine Schnittdarstellung entlang der Linie II-II von Fig. 1 in stark vergrößertem Maßstab.

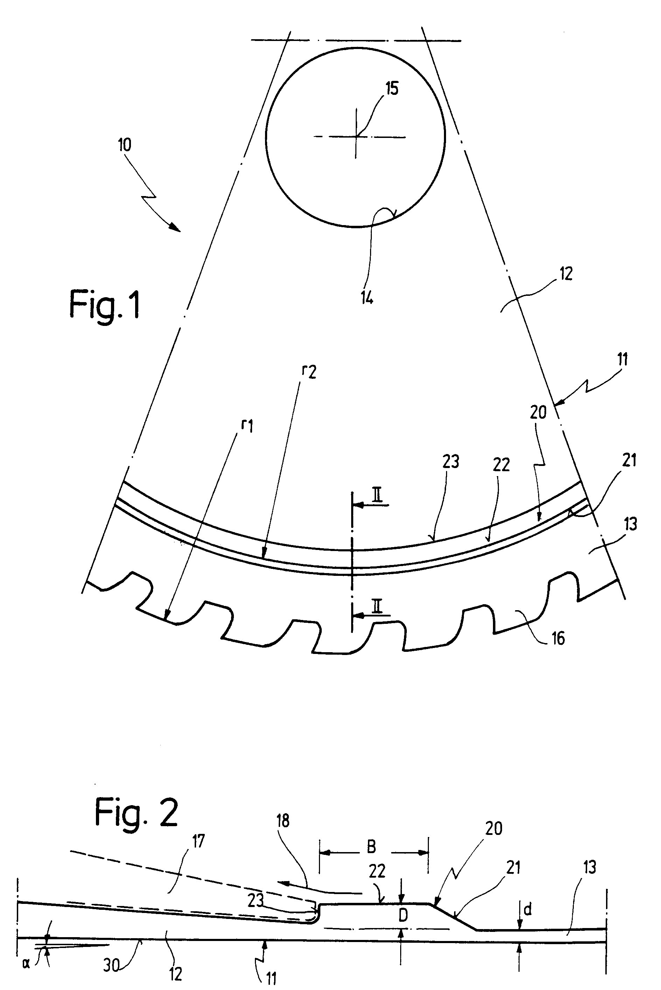

In Fig. 1 bezeichnet 10 ein Kreissägeblatt einer Art, wie sie in weiteren Einzelheiten in der DE 41 20 217 C2 oder der DE 36 35 318 C2 beschrieben ist. Weitere Einzelheiten können daher den beiden genannten Schriften entnommen werden.

Das Kreissägeblatt 10 umfaßt u.a. einen Ringkörper 11, der bei fertig montiertem Kreissägeblatt 10 auf einen (nicht dargestellten) ringförmigen Trägerkörper mit kegeliger oder hohlkegeliger Oberfläche aufgeschraubt ist. Es versteht sich jedoch, daß das Kreissägeblatt 10 auch ohne Trägerkörper ausgebildet sein, d.h. nur aus dem Ringkörper 11 bestehen kann. Alternativ ist es auch möglich, den Trägerkörper und den Ringkörper 11 einstückig auszubilden.

Der Ringkörper 11 ist radial innen mit einem axial dickeren Bereich 12 und radial außen mit einem axial dünneren Bereich 13 versehen. Im Zentrum des dickeren Bereichs 12 befindet sich eine Befestigungsbohrung 14, durch die eine Antriebswelle der Kreissäge reichen kann. Die Achse des Kreissägeblattes 10 ist mit 15 bezeichnet. Weitere Befestigungsbohrungen, mit denen das Kreissägeblatt 10 auf dem nicht-dargestellten Träger befestigt, z.B. angeschraubt werden kann, sind der Übersichtlichkeit halber nicht dargestellt.

Am Umfang des Kreissägeblatts 10 sind Zähne 16 üblicher Konfiguration zu erkennen. In Fig. 2 ist mit 17 ein stationäres Abweiselement angedeutet, das ebenfalls als Ringkörper ausgebildet ist. Das Abweiselement 17 gestattet es, die abgetrennte Seitenware aus der Schnittebene heraus abzubiegen, wie mit einem Pfeil 18 angedeutet. Die abgetrennte Seitenware wird damit außer Kontakt mit dem rotierenden Kreissägeblatt 10 gebracht.

Radial innerhalb der Zähne 16 erstreckt sich entlang eines Umfanges des Ringkörpers 11 eine insgesamt mit 20 bezeichnete Wulst. Die Wulst 20 hat radial außen eine flach geneigte Anlauffläche 21. An ihrer Oberseite ist die Wulst 20 als flaches Plateau 22 ausgebildet. An ihrer radialen Innenseite schließt sich an das Plateau 22 eine axial nach innen weisende Stufe 23 an. An die Stufe 23 schmiegt sich das Abweiselement 17 mit möglichst geringem Spiel an.

An der Unterseite 30 des Ringkörpers 11 ist mit einem Winkel α angedeutet, daß die Unterseite 30 im eingebauten Zustand des Ringkörpers 11 kegelig ist. Der Winkel α liegt, wie erwähnt, zwischen 0,1° und etwa 1°.

In Fig. 1 ist der Flugkreisradius der Zähne 16 mit r₁ und der Radius der Kante im Übergang von der Anlauffläche 21 zum Plateau 22 mit r₂ bezeichnet. Die radiale Breite des Plateaus 22 beträgt B, die Dicke oder Erhebung der Wulst 20 über den Ringkörper 11 beträgt D. Die Dicke des Ringkörpers 11 radial außerhalb der Wulst 20 ist mit d bezeichnet.

Bei einem bevorzugten Ausführungsbeispiel der Erfindung beträgt der Flugkreisradius r₁ beispielsweise 350 mm. Die Dicke d liegt in der Größenordnung von 1,5 mm.

Ausgehend von diesen absoluten Größen ist bei diesem Ausführungsbeispiel bevorzugt, wenn die radiale Breite B des Plateaus 22 etwa drei- bis zehnmal so groß, vorzugsweise sechs- bis siebenmal so groß ist wie die axiale Dicke d. Bei den genannten absoluten Zahlen kann die radiale Breite B beispielsweise 10 mm betragen.

Die axiale Dicke D der Wulst 20 oberhalb des Ringkörpers 11 kann bei bevorzugten Ausführungsbeispielen ein- bis dreimal so groß, vorzugsweise ein- bis zweimal so groß sein wie die axiale Dicke d des Ringkörpers 11. Bei den genannten absoluten Zahlen beträgt die axiale Dicke D zum Beispiel 2,5 mm.

Schließlich ist die radiale Lage der Wulst 20 vorzugsweise so gewählt, daß der äußere Radius r₂ des Plateaus 22 zwischen 70 % und 90 %, vorzugsweise 80 % bis 90 % des Flugkreisradius r₁ beträgt. Bei den genannten absoluten Zahlen liegt der Radius r₂ zum Beispiel bei 300 mm.

Zur Herstellung des erfindungsgemäßen Kreissägeblatts 10 kann man auf unterschiedliche Weise vorgehen.

Bei bevorzugten Ausführungsbeispielen der Erfindung umfaßt das Kreissägeblatt 10, wie erwähnt, einen starren mechanischen Trägerkörper sowie einen separaten Ringkörper 11. Der Ringkörper 11 wird als ebenes Element mit der beschriebenen verbreiterten Wulst hergestellt. Nach dem Rollen des Ringkörpers 11 entlang der Wulst wird der Ringkörper - immer noch in ebener Gestalt - gegen eine kegelige oder hohlkegelige Oberfläche des separaten Trägerkörpers verschraubt. Beim Verschrauben springt der Ringkörper 11 von der ebenen Ausgangsform in die gewünschte, hohlkegelige Endform um.

Wenn gemäß anderen Ausführungsbeispielen der Erfindung das Kreissägeblatt 10 nur aus dem Ringkörper besteht oder der Ringkörper 11 mit dem Trägerkörper einstückig ausgebildet ist, ist der letztgenannte Verfahrensschritt nicht erforderlich. In diesem Fall wird die konische Form des Kreissägeblatts bereits während der Herstellung des Ringkörpers erzeugt.

## Patentansprüche

1. Kreissägeblatt, insbesondere zum Sägen von Holz, mit einem flachen Ringkörper (11), der an seinem äußeren Rand mit Zähnen (16) versehen ist, wobei der Ringkörper (11) eine kegelige Gestalt aufweist und entlang eines Umfanges radial innerhalb der Zähne (16) mit einer Wulst (20) versehen ist, dadurch gekennzeichnet, daß die Wulst (20) an ihrer Oberseite als flaches Plateau (22) ausgebildet ist.

2. Kreissägeblatt nach Anspruch 1, dadurch gekennzeichnet, daß das Plateau (22) eine radiale Breite (B) aufweist, die drei- bis zehnmal, vorzugsweise sechs- bis siebenmal so groß ist wie die axiale Dicke (d) des Ringkörpers (11) radial außerhalb der Wulst (20).

3. Kreissägeblatt nach Anspruch 1 oder 2, dadurch gekennzeichnet, daß die axiale Dicke (D) der Wulst (20) ein- bis dreimal, vorzugsweise ein- bis zweimal so groß ist wie die axiale Dicke (d) des Ringkörpers (11) radial außerhalb der Wulst (20).

4. Kreissägeblatt nach einem oder mehreren der Ansprüche 1 bis 3, dadurch gekennzeichnet, daß der äußere Radius (r₂) des Plateaus (22) zwischen 70 % und 90 %, vorzugsweise 80 % bis 90 % des Flugkreisradius (r₁) der Zähne (16) beträgt.

5. Verfahren zum Herstellen eines Kreissägeblatts (10), insbesondere zum Sägen von Holz unter Verwendung eines flachen Ringkörpers (11), der an seinem äußeren Rand mit Zähnen (16) versehen ist, wobei der Ringkörper (11) entlang eines Umfanges radial innerhalb der Zähne (16) mit einer Wulst (20) versehen ist, und wobei ferner der Ringkörper (11) entlang von zu seiner Drehachse (15) konzentrischen Kreisen gewalzt wird, dadurch gekennzeichnet, daß die Wulst (20) an ihrer Oberfläche als flaches Plateau (22) ausgebildet und der Ringkörper (11) entlang der Wulst (20) gewalzt wird.

6. Verfahren nach Anspruch 5, dadurch gekennzeichnet, daß der Ringkörper (11) nach dem Walzen gegen einen konzentrischen, kegelförmigen Träger verschraubt und dabei zu einer hohlkegeligen Gestalt umgeformt wird.
